# EUROPEAN PATENT APPLICATION

(11) **EP 4 318 792 A1**
(43) Date of publication of application: **07.02.2024**
(21) Application number: 22937659.5
(22) Date of filing: 31.08.2022
(51) Int. Cl.: H01M 50/591, H01M 50/178, H01M 50/105, H01M 50/531, H01M 50/211, H01M 50/249, H01M 50/593

(54) **BATTERY CELL, BATTERY MODULE, BATTERY PACK, AND VEHICLE COMPRISING SAME**

(30) Priority: 13.06.2022 KR 20220071596
(71) Applicant: LG ENERGY SOLUTION, LTD., Seoul 07335 (KR)
(72) Inventor: LEE, Seung-Byung, Daejeon 34122 (KR); PARK, Ah-Ram, Daejeon 34122 (KR); YOON, Kyoung-Soon, Daejeon 34122 (KR); KIM, Seok-Je, Daejeon 34122 (KR); LEE, Yong-Tae, Daejeon 34122 (KR)
(74) Representative: Plasseraud IP
(86) International application number: PCT/KR2022/013066
(87) International publication number: WO 2023/243766

(57) **Abstract**

A battery cell having an electrode tab with enhanced safety and improved cooling performance, and a battery module, a battery pack and a vehicle including the same is provided. The battery cell includes an electrode assembly including a cell body and an electrode tab provided to at least one side of the cell body, a cell case configured to accommodate the electrode assembly, an electrode lead drawn out of the cell case and connected to the electrode assembly through the electrode tab at a coupling portion, and a tab protection module accommodated in the cell case and covering at least a part of the electrode tab, the tab protection module including a heat dissipating material configured to discharge heat to the outside of the tab protection module.

## Description

### TECHNICAL FIELD

The present disclosure relates to a battery cell, and a battery module, a battery pack and a vehicle including the same, and more particularly, to a battery cell having an electrode tab with an enhanced safety and having improved cooling performance, and a battery module, a battery pack and a vehicle including the same.

The present application claims priority from Korean Patent Application No. 10-2022-0071596 filed on June 13, 2022, the disclosure of which is hereby incorporated herein by reference.

### BACKGROUND ART

Secondary batteries that are easily applicable to various product groups and have electrical characteristics such as high energy density are universally used not only in portable devices, but also in electric vehicles (EVs) and hybrid electric vehicles (HEVs) driven by an electric drive source. These secondary batteries are attracting attention as a new energy source for their improved eco-friendliness and energy efficiency not only due to their primary advantage of dramatically reducing the use of fossil fuels but also due to their secondary advantage of not generating by-products from the use of energy.

Examples of secondary batteries currently widely used in the art include a lithium ion battery, a lithium polymer battery, a nickel cadmium battery, a nickel hydride battery, a nickel zinc battery, and the like. The operating voltage of such a unit secondary battery cell, namely a unit battery cell, is about 2.5V to 4.5V. Therefore, when a higher output voltage than this is required, a battery pack may be configured by connecting a plurality of battery cells in series. In addition, according to the charge/discharge capacity required for the battery pack, a plurality of battery cells are connected in parallel. Accordingly, the number of battery cells included in the battery pack may be set in various ways according to a required output voltage or charge/discharge capacity.

When a battery pack is configured by connecting a plurality of battery cells in series/in parallel, in general, a battery module including at least one battery cell is configured first, and other components are added to the at least one battery module to configure the battery pack.

Meanwhile, in a conventional battery cell, the periphery of an electrode tab, which is provided in the electrode assembly and connected to the electrode lead, is surrounded only by the cell case without a separate protective structure, so the corresponding portion is vulnerable to an external force transmitted through the cell case or the electrode lead. In addition, the conventional battery cell has a problem in that there is no configuration capable of effectively discharging heat generated inside the cell case to the outside during charging and discharging of the battery cell.

### DISCLOSURE

### Technical Problem

The present disclosure is designed to solve the problems of the related art, and therefore the present disclosure is directed to providing a battery cell having an electrode tab with an enhanced safety and having improved cooling performance, and a battery module, a battery pack and a vehicle including the same.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery cell, comprising: an electrode assembly including a cell body and an electrode tab provided to at least one side of the cell body; a cell case accommodating the electrode assembly therein; an electrode lead drawn out of the cell case by a predetermined length and connected to the electrode assembly through the electrode tab; and a tab protection module accommodated in the cell case and configured to cover at least a part of the electrode tab, the tab protection module comprising a heat dissipating material configured to discharge heat outside the tab protection module.

Preferably, the tab protection module may include a first portion having an electrically insulating material and facing the electrode tab; and a second portion facing an inner surface of the cell case, the second portion comprising the heat dissipating material.

Preferably, the second portion may have a shape corresponding to the inner surface of the cell case facing the second portion.

Preferably, the battery cell may further comprise an electrical insulation member disposed on an outer surface of the second portion that faces the inner surface of the cell case.

Preferably, the electrical insulation member may have at least one heat dissipation hole formed in a surface thereof.

Preferably, the first portion may have a recessed seating groove that receives the second portion.

Preferably, at least a part of an outer surface of the seating groove may be rounded and correspond to at least a part of the second portion.

Preferably, the seating groove may include a guide groove a guide groove recessed from an outer surface toward the electrode tab by a predetermined depth, and the second portion may further include a protrusion arranged to be inserted into the guide groove.

Preferably, the second portion may include a pair of bent portions that face each other in upper and lower directions, each of the bent portions extending from an end of the first portion and toward the cell body, and a portion where the electrode tab and the electrode lead are connected may be disposed between the pair of bent portions.

Preferably, the battery cell may further comprise a heat transfer member disposed between each one of the pair of bent portions and the portion where the electrode tab and the electrode lead are connected.

Also, in another aspect of the present disclosure, there is also provided a battery module, comprising at least one battery cell according to an aspect of the present disclosure.

Also, in another aspect of the present disclosure, there is also provided a battery pack, comprising at least one battery module according to an aspect of the present disclosure.

Also, in another aspect of the present disclosure, there is also provided a vehicle, comprising at least one battery pack according to an aspect of the present disclosure.

Also, in another aspect of the present disclosure, there is also provided a battery cell, comprising: an electrode assembly including a cell body and an electrode tab provided to at least one side of the cell body; a cell case accommodating the electrode assembly therein; an electrode lead drawn out of the cell case by a predetermined length and connected to the electrode assembly through the electrode tab at a coupling portion; and a tab protection module accommodated in the cell case, the tab protection module including a first portion having an electrically insulating material facing the electrode tab, and a second portion connectable to the first portion, the second portion facing an inner surface of the cell case and comprising a heat dissipating material configured to discharge heat outside the tab protection module.

Preferably, the battery cell may further comprise an electrical insulating material disposed on an outer surface of the second portion and between the inner surface of the cell case and the second portion.

Preferably, the electrical insulating material may have at least one heat dissipation hole.

Preferably, the second portion may include a bent portion arranged between a lower surface of the first portion and the coupling portion.

Preferably, the battery cell may further comprise a TIM (Thermal Interface Material) disposed between the bent portion and the coupling portion.

Preferably, the first portion may comprise a polycarbonate (PC) file, a polyethylene terephthalate (PET) film, an isolation coating, or an anodization.

Preferably, the second portion may comprise an aluminum, copper, carbon composite sheet material, or ceramic composite sheet material.

### Advantageous Effects

According to an embodiment of the present disclosure, when an impact occurs outside the battery cell, it is possible to effectively prevent the electrode tab, which is structurally weak, from being separated from the electrode lead or damaged, which may result in the emission of the heat generated inside the battery cell.

Moreover, according to various embodiments of the present disclosure, several other additional effects may be achieved. Various effects of the present disclosure will be described in detail in each embodiment, or any effects that can be easily understood by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery cell according to an embodiment of the present disclosure.
FIG. 2 is a diagram showing the battery cell of FIG. 1, viewed from the above.
FIG. 3 is a partially exploded perspective view showing the battery cell of FIG. 1.
FIG. 4 is a cross-sectional view, taken along in the line A-A' of FIG. 1.
FIG. 5 is an entire exploded perspective view of the battery cell of FIG. 1.
FIG. 6 is a diagram exemplarily showing a heat transfer flow inside the battery cell of FIG. 1.
FIG. 7 is a diagram showing a battery cell according to the second embodiment of the present disclosure.
FIG. 8 is a diagram showing the inside of the battery cell of FIG. 7, viewed from a side.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

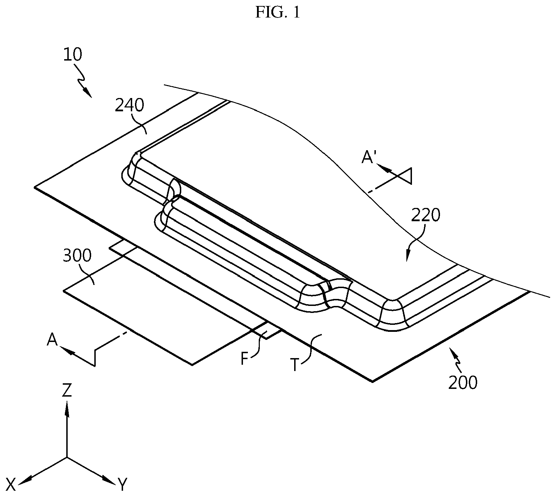

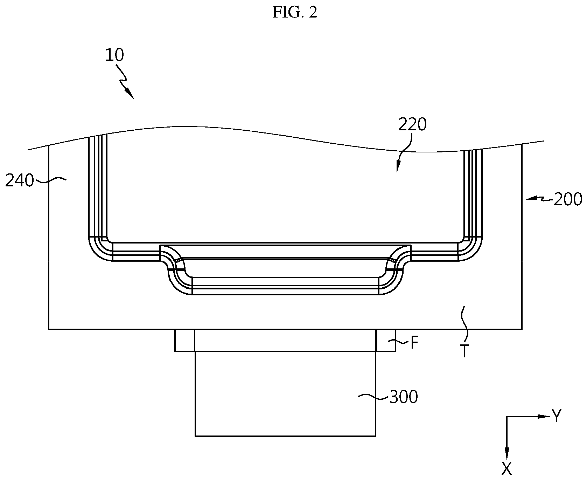

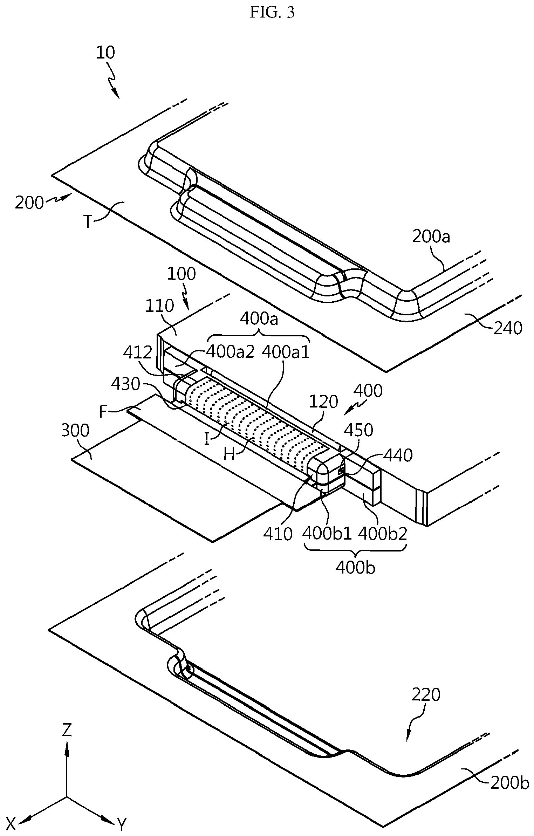

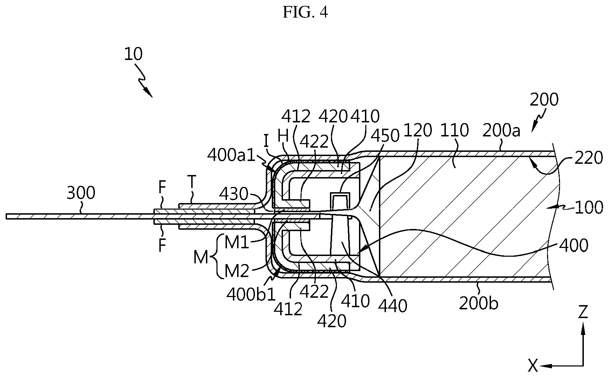

FIG. 1 is a diagram showing a battery cell 10 according to an embodiment of the present disclosure, FIG. 2 is a diagram showing the battery cell 10 of FIG. 1, viewed from the above, FIG. 3 is a partially exploded perspective view showing the battery cell 10 of FIG. 1, and FIG. 4 is a cross-sectional view, taken along in the line A-A' of FIG. 1. (In detail, FIG. 4 is a diagram showing the battery cell 10 of FIG. 1, sectioned along the XZ plane based on the line A-A'.)

In an embodiment of the present disclosure, the X-axis direction shown in the drawings may mean a longitudinal direction of the battery cell 10, the Y-axis direction may mean a left and right direction of the battery cell 10 perpendicular to the X-axis direction on the horizontal plane (XY plane), and the Z-axis direction may mean an upper and lower direction perpendicular to both the X-axis direction and the Y-axis direction.

Referring to FIGS. 1 to 4, the battery cell 10 according to an embodiment of the present disclosure may include an electrode assembly 100, a cell case 200, an electrode lead 300, and a tab protection module 400.

The battery cell 10 may mean a secondary battery. The battery cell 10 may be a pouch-type battery cell.

The electrode assembly 100 may include a cell body 110 and an electrode tab 120.

Although not shown in detail, the electrode assembly 100 may include a first electrode plate having a first polarity, a second electrode plate having a second polarity, and a separator interposed between the first electrode plate and the second electrode plate. As an example, the first electrode plate may be a positive electrode plate coated with a positive electrode active material or a negative electrode plate coated with a negative electrode active material, and the second electrode plate may correspond to an electrode plate having a polarity opposite to that of the first electrode plate.

The electrode tab 120 may be at least a part of an uncoated portion where a positive electrode active material or a negative electrode active material is not applied. The uncoated portion may be a portion protruding from the first electrode plate or the second electrode plate of the electrode assembly 100. Specifically, the electrode tab 120 may be formed by gathering portions processed by a notching process among the uncoated portion. The cell body 110 may be defined as a portion other than the electrode tab 120 in the electrode assembly 100.

Meanwhile, in the present disclosure, the electrode tab 120 is not limited to at least a part of the uncoated portion. That is, the electrode tab 120 may be separately provided and coupled to the uncoated portion.

The cell body 110 may be defined as a portion of the electrode assembly 100 other than the electrode tab 120. The electrode tab 120 may be provided to at least one of both sides of the cell body 110.

The cell case 200 may accommodate the electrode assembly 100 therein. That is, the cell case 200 may have an accommodation space for accommodating the electrode assembly 100 therein. At this time, the cell case 200 accommodates an electrolyte therein, and the cell case 200 accommodates the electrode assembly 100 in a state where the electrode assembly 100 is impregnated in the electrolyte. As an example, the cell case 200 may include a pouch film including a layer of a metal material (e.g., aluminum (Al)), but is not limited thereto.

The electrode lead 300 may be drawn out of the cell case 200 by a predetermined length. The electrode lead 300 may be provided in a pair, and the pair of electrode leads 300 may be provided to either side of the cell case 200, respectively, or may be provided to only one side, when viewed in the longitudinal direction (X-axis direction) of the battery cell 10. In addition, a lead film F for sealing the cell case 200 and the electrode lead 300 to each other may be interposed between the cell case 200 and the electrode lead 300. As an example, the lead film F may be provided as a heat-fusing film to increase the sealing force of the area of the cell case 200 where the electrode lead 300 is disposed. In addition, the lead film F may be configured to include an insulating material to prevent a short circuit of the electrode lead 300.

In addition, the electrode lead 300 may be connected to the electrode assembly 100 inside the cell case 200 through the electrode tab 120. As an example, the electrode lead 300 may be coupled to the electrode tab 120 by welding or the like.

The tab protection module 400 may be accommodated in the cell case 200 and configured to cover at least a part of the electrode tab 120.

Typically, the electrode tab 120 may have a relatively small thickness compared to the cell body 110. Therefore, the electrode tab may be vulnerable to breaking, or otherwise separating from the electrode lead 300, when an external force is applied to the cell case 200. In the battery cell 10 of the present disclosure, however, the tab protection module 400 may be accommodated inside the cell case 200 and cover at least a part of the electrode tab 120. By covering the electrode tab 120 with the tab protection module 400, the tab protection module 400 may receive the external force or the like transmitted to the cell case 200 more preferentially than the electrode tab 120.

Specifically, the tab protection module 400 may be arranged to absorb at least a part of an impact caused by an external force transmitted to the cell case 200. For example, the tab protection module 400 may be configured to disperse the impact to other regions of the electrode assembly 100. Accordingly, the impact on the vulnerable electrode tab 120 may be minimized.

Even more specifically, the tab protection module 400 may be configured to cover at least a part of the electrode tab 120 and engage an inner surface of the cell case 200. In this regard, the tab protection module 400 may be arranged to absorb an external force applied to the cell case 200 and disperse the impact away from the electrode tab 120 to prevent the structurally weak electrode tab 120 from breaking and/or separating from the electrode lead 300 as a result of the impact.

In addition, the tab protection module 400 may be configured to discharge heat of the battery cell 10 to the outside through at least a part thereof. That is, at least a part of the tab protection module 400 may include a heat dissipation material so that heat generated inside the cell case 200 may be discharged to a location outside the cell case 200 during charging and discharging of the battery cell 10.

Still yet, an event such as a thermal runaway phenomenon may occur in the battery cell 10. When a thermal runaway phenomenon occurs, a high-temperature and high-pressure venting gas may be generated inside the cell case 200. As mentioned above, the heat dissipating material of the tab protection module 400 may be configured to discharge the high-temperature gas. Furthermore, the internal pressure within the cell case 200 does not rapidly increase as a result of the venting gas generated inside the cell case 200 because the tab protection module 400 allows the volume of the cell case 200 to increase. Accordingly, it is possible to effectively delay the time when a certain region of the cell case 200 is damaged and the venting gas is discharged to the outside of the cell case 200.

In summary, the tab protection module 400 of the battery cell 10 may disperse an externally applied force away from the structurally weak electrode tab 120 to prevent the electrode tab 120 from being damaged and/or separated from the electrode lead 300. In addition, the tab protection module 400 may discharge heat generated inside the battery cell 10 to a location outside the battery cell 10. Furthermore, the tab protection module 400 may permit the cell case 200 to have a larger volume, thereby delaying the phenomenon that high-pressure venting gas negatively impacts battery performance and safety.

Hereinafter, the battery cell 10 of the present disclosure will be described in more detail.

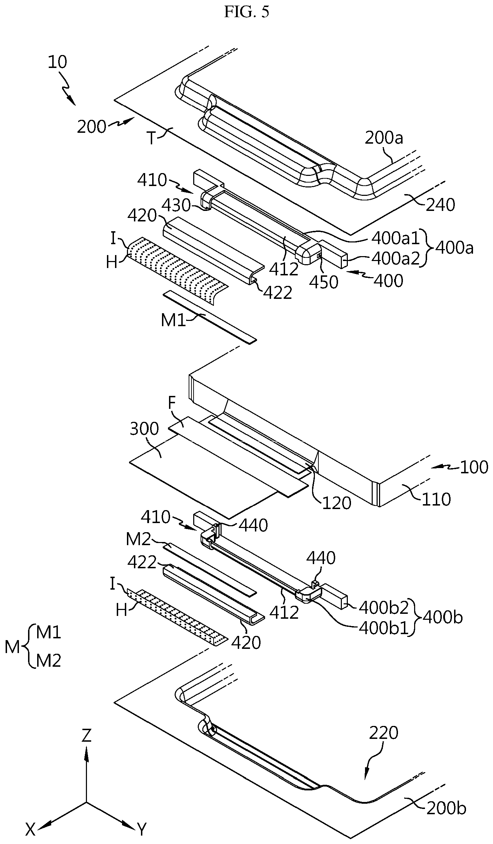

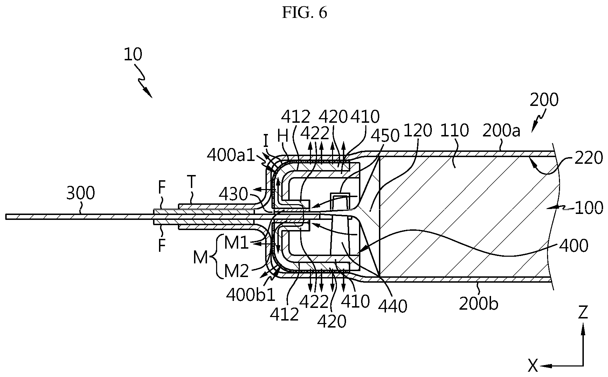

FIG. 5 is an entire exploded perspective view of the battery cell 10 of FIG. 1, and FIG. 6 is a diagram exemplarily showing a heat transfer flow inside the battery cell 10 of FIG. 1.

Referring to FIGS. 1 to 6 again, the tab protection module 400 may be configured to have a shape corresponding to the inner surface of the cell case 200 facing the tab protection module 400. According this embodiment, the tab protection module 400 may more effectively buffer the impact caused by an external force transmitted to the cell case 200 from the outside. Accordingly, the impact applied to the electrode tab 120 may be minimized. In addition, because of the corresponding shape, the tab protection module 400 may be accommodated inside the cell case 200 without causing a shape deformation of the cell case 200.

Specifically, the cell case 200 may include an accommodation portion 220 and a sealing portion 240.

The accommodation portion 220 may be configured to accommodate the electrode assembly 100 therein.

The sealing portion 240 may have a shape extending outward by a predetermined length from the periphery of the accommodation portion 220.

Meanwhile, the cell case 200 may include a first case member 200a and a second case member 200b. Peripheral regions of the edges of the first case member 200a and the second case member 200b may come into contact with each other and be coupled by thermal fusion to form the sealing portion 240 described above. In addition, a space is formed inside the sealing portion 240 by the separation between the first case member 200a and the second case member 200b, and this space may serve as the accommodation portion 220 described above.

In addition, the sealing portion 240 may include a case terrace T. The case terrace T may refer to a region of the sealing portion 240 located in a direction along which the electrode lead 300 is drawn out from the cell case 200.

That is, the case terrace T may be configured to extend by a predetermined length from the accommodation portion 220 and to support the electrode lead 300. At this time, it is possible to seal the electrode lead 300 and the cell case 200 to each other through the lead film F described above. Specifically, the lead film F may be interposed between the electrode lead 300 and the case terrace T.

The tab protection module 400 described above may have a shape corresponding to the inner surface of the accommodation portion 220 adjacent to the case terrace T. In this case, regions of the accommodation portion 220 and the case terrace T adjacent to each other may be structurally weak due to the shape of the bent structure or the like.

In the embodiment of the present disclosure, since the tab protection module 400 may be accommodated in the accommodation portion 220 while having a shape corresponding to the inner surface of the accommodation portion 220 adjacent to the case terrace T, the rigidity of the adjacent regions of the accommodation portion 220 and the case terrace T may be reinforced. Accordingly, the tab protection module 400 may enhance the structural rigidity of the cell case 200 further by reinforcing the rigidity of the structurally weak region in the cell case 200.

Referring to FIGS. 3 to 6, the tab protection module 400 may be provided to at least one side of the cell body 110 described above. In this state, the tab protection module 400 may at least partially cover upper and lower sides of the electrode tab 120. The tab protection module 400 may be provided to one side of the cell body 110 to cover most of the upper and lower sides of the electrode tab 120.

Specifically, the tab protection module 400 may include a first protection cap 400a and a second protection cap 400b. In certain implementations, the first protection cap 400a may be an upper protection cap and the second protection cap 400b may be a lower protection cap. The first protection cap 400a and the second protection cap may be coupled to one another and, when assembled, the tab protection module 400 may at least partially cover and protect the upper and lower sides of the electrode tab 120.

The first protection cap 400a may be provided to at least one side of the cell body 110. In addition, the first protection cap 400a may at least partially cover the upper side of the electrode tab 120.

The first protection cap 400a may include a first cap body 400a1 and a first cap wing 400a2.

The first cap body 400a1 may at least partially cover the upper side of the electrode tab 120. In addition, the first cap body 400a1 may be configured to have a shape corresponding to the inner surface of the cell case 200 facing the first cap body 400a1.

The first cap wing 400a2 may be configured to extend from both ends of the first cap body 400a1. Put differently, the first cap wings 400a2 may cover a part of the cell body 110 provided laterally to the lateral sides of the electrode tab 120. Accordingly, the first cap wing 400a2 may be configured to cover one side of the cell body 110 at which the electrode tab 120 is not provided.

Similarly, the second protection cap 400b may be provided to at least one side of the cell body 110. In addition, the second protection cap 400b is connected to the first protection cap 400a in the upper and lower direction, and may at least partially cover the lower side of the electrode tab 120.

The second protection cap 400b may include a second cap body 400b 1 and a second cap wing 400b2.

The second cap body 400b1 may at least partially cover the lower side of the electrode tab 120. In addition, the second cap body 400b1 may be configured to have a shape corresponding to the inner surface of the cell case 200 facing the second cap body 400b 1.

The second cap wing 400b2 may be configured to extend from both ends of the second cap body 400b1. Put differently, the second cap wing 400b2 may cover a part of the cell body 110 provided laterally to the lateral sides of the electrode tab 120. Accordingly, the second cap wing 400b2 may be configured to cover one side of the cell body 110 at which the electrode tab 120 is not provided.

The first protection cap 400a and the second protection cap 400b may be assembled with each other in the upper and lower direction of the electrode tab 120 to at least partially surround the electrode tab 120.

Accordingly, it is possible to minimize that an impact caused by an external force transmitted through the cell case 200 from the outside is transmitted to the electrode tab 120. In addition, since an impact caused by an external force transmitted to the cell case 200 from the outside may be dispersed even in an area of the cell body 110 where the electrode tab 120 is not provided, the impact applied to the electrode tab 120 may be further minimized.

Referring to FIGS. 3 to 5, the first protection cap 400a and the second protection cap 400b may be coupled to each other through hook-coupling. Through the hook-coupling, the first protection cap 400a and the second protection cap 400b may be coupled in an easier and simpler way.

Specifically, any one of the first protection cap 400a and the second protection cap 400b may have a fastening hook 440 for the hook-coupling. In addition, the other of the first protection cap 400a and the second protection cap 400b may have a hook groove 450 into which the fastening hook 440 is fitted.

As an example, the fastening hook 440 may be formed in a pair and provided to the second protection cap 400b. The pair of fastening hooks 440 may be provided to protrude from both sides of the second cap body 400blby a predetermined length.

In addition, the hook groove 450 may be formed in a pair to correspond to the fastening hook 440 and provided to the first protection cap 400a. The pair of hook grooves 450 may be formed in a groove shape capable of fixing the end of the fastening hook 440 at both sides of the first cap body 400a1.

Meanwhile, in the tab protection module 400, the number and locations of the fastening hooks 440 and the hook groove 450 are not limited to the above embodiment, and it is also possible that the fastening hook 440 is provided to the first protection cap 400a and the hook groove 450 is provided to the second protection cap 400b. In addition, the first protection cap 400a and the second protection cap 400b may be coupled with each other by snap-fitting or the like known in the art, instead of hooking.

Referring to FIGS. 3 to 5 again, the tab protection module 400 may be configured such that at least a part thereof is in close contact with the cell body 110.

Specifically, the first cap wing 400a2 of the first protection cap 400a and the second cap wing 400b2 of the second protection cap 400b may be configured to be in close contact with one side of the cell body 110 at which the electrode tab 120 is not provided.

Accordingly, an impact caused by an external force transmitted from the outside to the cell case 200 may be more reliably dispersed to the entire cell body 110, and thus the impact applied to the electrode tab 120 may be further minimized.

Referring to FIGS. 3 and 4 again, the tab protection module 400 may further include a slot 430 through which the electrode lead 300 passes. The slot 430 may be formed at a front side of the tab protection module 400.

Specifically, when the first protection cap 400a and the second protection cap 400b are coupled to each other, if viewed from the front of the tab protection module 400, an opening of a predetermined height may be formed between the first protection cap 400a and the second protection cap 400b in the upper and lower direction. The slot 430 may correspond to the opening of a predetermined height formed when the first protection cap 400a and the second protection cap 400b are assembled.

Put differently, the slot 430 may be greater in height than the height of the electrode tab 120. Specifically, when the electrode lead 300 is disposed to extend through the slot 430, the electrode lead 300 may be spaced apart from the upper and lower walls of the tab protection module 400 in a region corresponding to the slot 430. That is, when the electrode lead 300 is disposed to extend through the slot 430, the slot 430 may be greater in height than the height of the electrode tab 120 so that the upper and lower surfaces of the electrode lead 300 may be spaced apart from the tab protection module 400.

According to this embodiment, when an external force is applied to the cell case 200, the tab protection module 400 may absorb or the force and disperse the force without contacting the electrode lead 300. As a result, it is possible to prevent the electrode lead 300 and the electrode tab 120 coupled thereto from being damaged and to minimize the occurrence of a short circuit in the electrode lead 300 and the electrode tab 120.

Referring to FIG. 5, the tab protection module 400 may include a first portion 410 and a second portion 420. Specifically, each of the first protection cap 400a and the second protection cap 400b may include a first portion 410 and a second portion 420.

The first portion 410 may be arranged to face the electrode tab 120. The first portion 410 may include an insulating material. Accordingly, even when the first portion 410 comes into contact with the cell body 110, the electrode tab 120, and the like, the occurrence of a short circuit of the cell body 110, the electrode tab 120, and the like may be minimized.

The second portion 420 may be arranged to face the inner surface of the cell case 200. The second portion 420 may be configured to absorb heat generated inside the cell case 200 (for example, inside the accommodation portion 220) and then subsequently discharge the absorbed heat to the outside of the tab protection module 400. That is, the second portion 420 may include a heat dissipating material.

According to this embodiment, while protecting the electrode tab 120 through the tab protection module 400, it is possible to prevent a short circuit of the electrode tab 120 or the like in a portion facing the electrode tab 120, and simultaneously it is possible to discharge the heat generated inside the battery cell 10 to the outside of the battery cell 10.

In addition, the first portion 410 and the second portion 420 described above may be coupled with each other to configure a first protection cap 400a and a second protection cap 400b. Specifically, a part of the first portion 410 and the second portion 420 may configure a first cap body 400a1 of the first protection cap 400a and a second cap body 400b 1 of the second protection cap 400b. In addition, the remaining part of the first portion 410 may configure a first cap wing 400a2 of the first protection cap 400a and a second cap wing 400b2 of the second protection cap 400b.

Meanwhile, it is important that the inner surface of the tab protection module 400, facing the electrode assembly 100, has excellent electrical insulation properties, and it is important that the outer surface of the tab protection module 400, facing the inner surface of the cell case 200, has excellent heat dissipation properties. To realize this function, the first portion 410 may include a material having relatively superior electrical insulation properties. By way of example, the electric insulating material of the first portion 410 may be a film, such as a polycarbonate (PC) or a polyethylene terephthalate (PET), an isolation coating, or an anodization. The second portion 420 may include a material having relatively superior heat dissipation properties. For example, the heat dissipation material of the second portion 420 may include aluminum, copper, carbon or ceramic composite sheet materials, and the like. However, if the second portion 420 is formed of a non-electrically conducting material, the first portion 410 may not include an electrically insulating material. Meanwhile, the specific materials of the first portion 410 and the second portion 420 are not limited to the foregoing examples. Any material that satisfies the above desired characteristics and does not cause a reaction with the electrolyte accommodated in the cell case 200 may be used.

Referring to FIGS. 3 to 6 again, the second portion 420 may be configured to have a shape corresponding to the inner surface of the facing cell case 200. According to this embodiment, the tab protection module 400 may more efficiently discharge heat generated inside the battery cell 10 to the outside of the battery cell 10 through the cell case 200.

In addition, the battery cell 10 may further include an electrical insulation member I.

The electrical insulation member I may be disposed at the outer surface of the second portion 420 facing the inner surface of the cell case 200. That is, the electrical insulation member I may be disposed between the second portion 420 and the inner surface of the cell case 200.

In the battery cell 10 of the present disclosure, the electrode tab 120 and the electrode lead 300 may be connected, typically via welding, at a coupling portion. The tab protection module 400 may surround and protect at least a part of the coupling portion of the battery cell 10. Put differently, the coupling portion between the electrode tab 120 and the electrode lead 300 may be located in an inner space of the tab protection module 400. Accordingly, damage to the electrode tab 120 may be minimized, and the connection between the electrode tab 120 and the electrode lead 300 may be stably maintained.

As shown in FIG. 4, at least a part of the coupling portion may be disposed adjacent to the second portion 420.

Since the electrical insulation member I is disposed on the outer surface of the second portion 420 including a heat dissipation material, the likelihood of a short circuit in the region of the coupling portion, adjacent to the second portion 420, may be minimized.

In particular, as shown in FIGS. 3 to 6, the electrical insulation member I may include at least one heat dissipation hole H formed through the electrical insulation member I.

As a result, when the second portion 420 discharges heat generated inside the battery cell 10, the heat may further be discharged through the electrical insulation member I, via the dissipation hole H, to the outside of the battery cell 10.

The combination of the first portion 410, the second portion 420, and the electrical insulation member I may be thus configured to discharge heat generated inside the battery cell 10, while minimizing the risk of a short circuit. In conventional battery calls, a material having electrical insulation properties is often applied to the inner surface of the cell case. Thus, even when the known cell cases are made of a pouch film having a metal layer, a direct short circuit is often prevented by the insulating layer that covers the metal layer. However, the use of this insulation material in this manner has other drawbacks. For example, when the inner surface of the cell case is damaged, the metal layer may become exposed and the risk of a short circuit may increase. Meanwhile, the electrical insulating material of the tab protection module 400 according to the present disclosure may provide an additional safeguard against the short circuit described herein. In addition, in order to improve the heat dissipation of the tab protection module 400, the second portion 420 may include a metal material. When the second portion 420 includes a metal material, the risk of a short circuit may increase due to the direct contact between the second portion 420 and the inner surface of the cell case 200. At this time, the electrical insulation member I may minimize this risk of a short circuit. Thus, the electrical insulation member I may not be needed if the second portion 420 is formed of a heat dissipating material that is not a metal.

Referring to FIGS. 3 to 6, the first portion 410 may define a recessed seating groove 412 on the outer surface of the first portion 410. That is, the seating groove 412 may be formed to be recessed on the outer surface of the first portion 410.

The seating groove 412 may be formed as a recess extending from the outer surface of the first portion 410 and toward the inner surface of the first portion 410 that faces the electrode tab 120.

In addition, the second portion 420 may be arranged to be seated in the seating groove 412 and closely coupled to the first portion 410. That is, the seating groove 412 may accommodate the second portion 420.

According to this embodiment, the second portion 420 including the heat dissipating material may be stably seated on the first portion 410. Accordingly, the heat generated inside the battery cell 10 may be more stably discharged to the outside of the battery cell 10.

In particular, at least a part of the outer surface of the seating groove 412 may be formed to be rounded to correspond to at least a part of the second portion 420. That is, the seating groove 412 of the first portion 410 and the second portion 420 may be configured to have a predetermined radius of curvature. Specifically, the seating groove 412 and the second portion 420 may have approximately the same radius of curvature.

According to this embodiment, the second portion 420 including the heat dissipating material may be closely coupled to the first portion 410 more stably. Accordingly, the heat generated inside the battery cell 10 may be more stably discharged to the outside of the battery cell 10. Furthermore, when the second portion 420 is disposed within the seating groove 412, damage to the seating groove 412 and the second portion 420 may be minimized. In addition, damage to the second portion 420 by an external impact may be minimized.

The second portion 420, as shown in FIGS. 4 to 6, may include a bent portion 422.

The bent portion 422 may extend generally in the X-Y plane and from the end of the first portion 410 toward the cell body 110. In addition, the bent portion 422 of the first protection cap 400a may be configured to face the bent portion 422 of the second protection cap 400b in the upper and lower directions. At this time, the end of the first portion 410 adjacent to the electrode lead 300 may also be configured to face in the upper and lower directions.

Specifically, the pair of bent portions 422 may be formed to extend toward the cell body 110 to surround the ends of their respective first portions 410 adjacent to the electrode lead 300. That is, the pair of bent portions 422 may surround the ends of their respective first portions 410 adjacent to the electrode lead 300 together with the other region of the second portion 420.

As shown in FIG. 4, the portion (coupling portion) where the electrode tab 120 and the electrode lead 300 are connected may be disposed between the pair of bent portions 422. Accordingly, the second portion 420 may absorb the heat generated at the coupling portion

According to this embodiment, through the second portion 420, it is possible to absorb the heat generated in the portion where the electrode tab 120 and the electrode lead 300 are connected, in which heat may be generated greatest inside the battery cell 10. Accordingly, the heat generated inside the battery cell 10 may be more efficiently discharged to the outside of the battery cell 10.

Referring to FIGS. 4 to 6 again, the battery cell 10 may further include a heat transfer member M.

The heat transfer member M may be disposed between any one of the pair of bent portions 422 and the portion (coupling portion) where the electrode tab 120 and the electrode lead 300 are connected. As an example, the heat transfer member M may include a TIM (Thermal Interface Material) material.

Specifically, the heat transfer member M may include a first member M1 and a second member M2.

The first member M1 may be disposed against a lower surface of the bent portion 422 of the first protection cap 400a and between that bent portion and the coupling portion. At this time, the first member M1 may be in surface contact with the lower surface of the bent portion 422 of the first protection cap 400a.

The second member M2 may be disposed against an upper surface of the bent portion 422 of the second protection cap 400b and between that bent portion 422 and the coupling portion. At this time, the second member M2 may be in surface contact with the upper surface of the bent portion 422 of the second protection cap 400b.

According to this embodiment, the heat generated at the portion where the electrode tab 120 and the electrode lead 300 are connected may be more efficiently absorbed through the second portion 420. Accordingly, the heat generated inside the battery cell 10 may be more efficiently discharged to the outside of the battery cell 10.

In addition, since the heat transfer member M is disposed between the portion where the electrode tab 120 and the electrode lead 300 are connected and each bent portion 422, it is possible to prevent the bent portion 422 from directly contacting the portion where the electrode tab 120 and the electrode lead 300 are connected. Accordingly, it is possible to minimize the occurrence of a short circuit in the portion where the electrode tab 120 and the electrode lead 300 are connected.

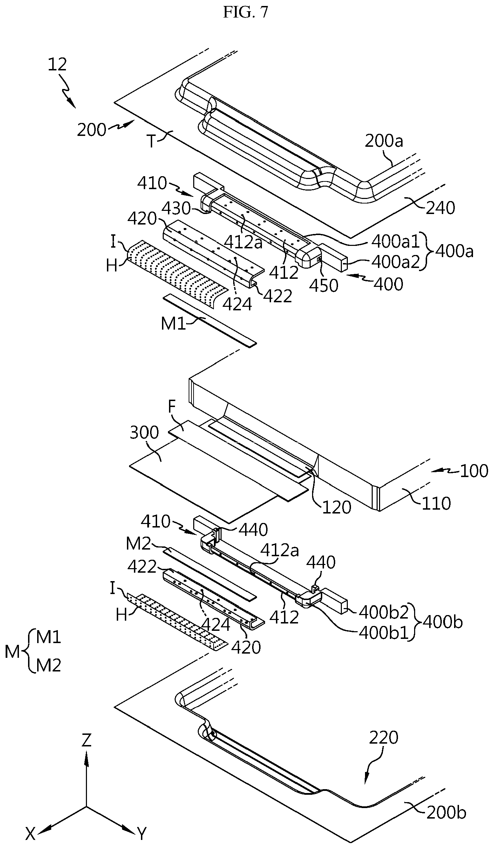

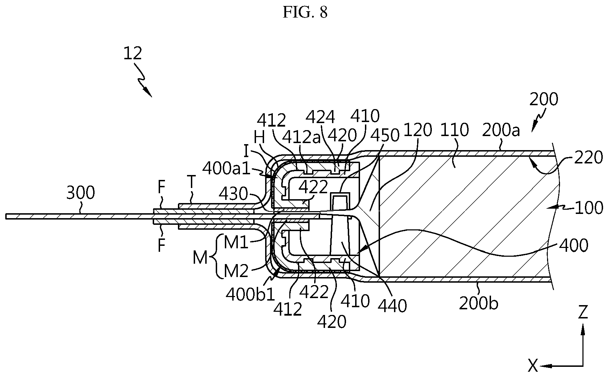

FIG. 7 is a diagram showing a battery cell 12 according to the second embodiment of the present disclosure, and FIG. 8 is a diagram showing the inside of the battery cell 12 of FIG. 7, viewed from a side.

Since the battery cell 12 according to this embodiment is similar to the battery cell 10 of the former embodiment, components substantially identical or similar to those of the former embodiment will not be described again, and features different from those of the former embodiment will be described in detail.

Referring to FIGS. 7 and 8, in the battery cell 12 according to this embodiment, the seating groove 412 of the first portion 410 may include a guide groove 412a. The guide groove 412a may be formed to be recessed toward the electrode tab 120 by a predetermined depth from the seating groove 412. That is, the guide groove 412a may be formed to be recessed from the outer surface of the seating groove 412.

Also, the second portion 420 may include a protrusion 424 having a shape corresponding to the guide groove 412a. The protrusion 424 may be configured to be inserted into the guide groove 412a. Accordingly, the second portion 420 may be more stably and closely coupled to the first portion 410.

According to the battery cell 12 of this embodiment, the second portion 420 including the heat dissipating material may be more stably seated on the first portion 410. Accordingly, the heat generated inside the battery cell 10 may be more stably discharged to the outside of the battery cell 10.

Meanwhile, one or more battery cells 10, 12 according to the present disclosure may be provided to constitute a battery module. That is, the battery module according to the present disclosure may include one or more battery cells 10, 12 according to the present disclosure. Specifically, one or more battery cells 10, 12 may constitute a cell assembly, and the cell assembly may be accommodated in a module case.

In addition, at least one battery module according to the present disclosure may be provided to configure the battery pack. That is, the battery pack according to the present disclosure may include at least one battery module according to the present disclosure. In addition, the battery pack may further include a pack case for accommodating the battery module therein and various devices for controlling the charging and discharging of the battery pack, for example a battery management system (BMS), a current sensor and a fuse.

In addition, the battery pack according to the present disclosure may be applied to a vehicle, such as an electric vehicle. That is, the vehicle according to the present disclosure may include at least one battery pack according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Meanwhile, even though the terms indicating directions such as "upper", "lower", "left", "right", "front" and "rear" are used herein, these terms are selected just for convenience of description only, and it is obvious to those skilled in the art that these terms may change depending on the position of the stated element or an observer.

## Claims

1. A battery cell, comprising:
an electrode assembly including a cell body and an electrode tab provided to at least one side of the cell body;
a cell case accommodating the electrode assembly therein;
an electrode lead drawn out of the cell case by a predetermined length and connected to the electrode assembly through the electrode tab; and
a tab protection module accommodated in the cell case and configured to cover at least a part of the electrode tab, the tab protection module comprising a heat dissipating material configured to discharge heat outside of the tab protection module.

2. The battery cell according to claim 1,
wherein the tab protection module includes:
a first portion having an electrically insulating material and facing the electrode tab; and
a second portion facing an inner surface of the cell case, the second portion comprising the heat dissipating material.

3. The battery cell according to claim 2,
wherein the second portion has a shape corresponding to the inner surface of the cell case facing the second portion.

4. The battery cell according to claim 2, further comprising:
an electrical insulation member disposed on an outer surface of the second portion that faces the inner surface of the cell case.

5. The battery cell according to claim 4,
wherein the electrical insulation member has at least one heat dissipation hole.

6. The battery cell according to claim 2,
wherein the first portion has a recessed seating groove that receives the second portion.

7. The battery cell according to claim 6,
wherein at least a part of the seating groove is rounded and corresponds to at least a part of the second portion.

8. The battery cell according to claim 6,
wherein the recessed seating groove includes a guide groove recessed from an outer surface toward the electrode tab by a predetermined depth, and
the second portion further includes a protrusion arranged to be inserted into the guide groove.

9. The battery cell according to claim 2,
wherein the second portion includes a pair of bent portions that face each other in upper and lower directions, each of the bent portions extending from an end of the first portion and toward the cell body, and
a portion where the electrode tab and the electrode lead are connected is disposed between the pair of bent portions.

10. The battery cell according to claim 9, further comprising:
a heat transfer member disposed between each one of the pair of bent portions and the portion where the electrode tab and the electrode lead are connected.

11. A battery module, comprising at least one battery cell according to any one of claim 1.

12. A battery pack, comprising at least one battery module according to claim 11.

13. A vehicle, comprising at least one battery pack according to claim 12.

14. A battery cell, comprising:
an electrode assembly including a cell body and an electrode tab provided to at least one side of the cell body;
a cell case accommodating the electrode assembly therein;
an electrode lead drawn out of the cell case by a predetermined length and connected to the electrode assembly through the electrode tab at a coupling portion; and
a tab protection module accommodated in the cell case, the tab protection module including a first portion having an electrically insulating material facing the electrode tab, and a second portion connectable to the first portion, the second portion facing an inner surface of the cell case and comprising a heat dissipating material configured to discharge heat outside the tab protection module.

15. The battery cell according to claim 14, further comprising:
an electrical insulating material disposed on an outer surface of the second portion and between the inner surface of the cell case and the second portion.

16. The battery cell according to claim 15,
wherein the electrical insulating material has at least one heat dissipation hole.

17. The battery cell according to claim 14,
wherein the second portion includes a bent portion arranged between a lower surface of the first portion and the coupling portion.

18. The battery cell according to claim 17, further comprising:
a TIM (Thermal Interface Material) disposed between the bent portion and the coupling portion.

19. The battery cell according to claim 14,
wherein the first portion comprises a polycarbonate (PC) file, a polyethylene terephthalate (PET) film, an isolation coating, or an anodization.

20. The battery cell according to claim 14,
wherein the second portion comprises an aluminum, copper, carbon composite sheet material, or ceramic composite sheet material.
